**Europäisches Patentamt**

**European Patent Office**

**Office européen des brevets**

(19)

(11) **EP 1 148 628 A2**

(12) **EUROPÄISCHE PATENTANMELDUNG**

(43) Veröffentlichungstag:
    **24.10.2001  Patentblatt 2001/43**

(51) Int Cl.⁷: **H02M 5/257**

(21) Anmeldenummer: **01107807.8**

(22) Anmeldetag: **05.04.2001**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(30) Priorität: **07.04.2000  DE 10017432**

(71) Anmelder: **Heinrich Kopp AG
    D-63796 Kahl (DE)**

(72) Erfinder:
    • **Fleckenstein, Hans-Jürgen
      63776 Mömbris (DE)**
    • **Bendzinski, Peter
      63110 Rodgau (DE)**

(74) Vertreter: **Reinhard - Skuhra - Weise & Partner
    Friedrichstrasse 31
    80801 München (DE)**

(54) **Dimmer**

(57)    Dimmer zum Dimmen einer Last (6) mit

einem steuerbaren Leistungsschalter (9) zum Schalten eines Netzes (3, 7) an die Last (6);
einer an das Netz (3, 7) angeschlossenen Spannungsversorgungsschaltung (11) zu Versorgung des Dimmers (1) mit einer Dimmer-Versorgungsspannung;
einer Überwachungsschaltung (18) zur Überwachung der von der Spannungsversorgungsschaltung (11) abgegebenen Dimmer-Versorgungsspannung; wobei eine an die Überwachungsschaltung (18) angeschlossene Steuereinheit (15) den Leistungsschalter (9) zum Aufladen eines Energiespeichers in der Spannungsversorgungsschaltung (11) öffnet, wenn die Dimmer-Versorgungsspannung einen Versorgungsspannungs-Schwellenwert $U_S$ unterschreitet.

Fig. 1

EP 1 148 628 A2

## Beschreibung

Die Erfindung betrifft einen Dimmer zum Dimmen einer Last mit einer sichergestellten Spannungsversorgung.

Dimmer sind z.B. Helligkeitseinsteller für Beleuchtungskörper. Herkömmliche Dimmersysteme nach dem Stand der Technik benötigen für ihr einwandfreies Funktionieren eine gewisse eigene Energiemenge. Dimmersysteme beziehen die von ihnen benötigte Energiemenge in der Regel aus der Netz-Phasenleitung für die Last. An der Netz-Phasenleitung liegt eine Wechselspannung zur Versorgung der Last bzw. des Beleuchtungskörpers an. Die Phasen-Wechselspannung ist sinusförmig mit einer Periode T. Die positive bzw. negative Halbwelle, deren Dauer eine halbe Zeitperiode $\frac{T}{2}$ beträgt, wird in eine LastAnsteuerungszeit $T_1$ zur Versorgung der Last und in eine Dimmer-Versorgungsansteuerzeit $T_2$ zur elektrischen Energieversorgung des Dimmers unterteilt. Dabei gilt:

$$T_1 + T_2 = \frac{T}{2}$$

Während der Last-Ansteuerungszeit $T_1$ wird dabei der Dimmer aus einem internen Energiespeicher, beispielsweise einem aufgeladenen Kondensator, gespeist. Nach Abschalten der Last durch den Dimmer wird während der Dimmer-Versorgungsansteuerzeit $T_2$ der interne Energiespeicher des Dimmers nachgeladen.

Die während einer bestimmten Zeitdauer für den Dimmer zur Verfügung stehende elektrische Energiemenge ist neben der Lastgröße auch abhängig von der Lastart. Die zur Verfügung stehende Energiemenge hängt beispielsweise davon ab, ob die angeschlossene Last eine ohmsche oder eine induktive Last ist und ob elektronische Vorschaltgeräte vorhanden sind. Da die während der Dimmer-Versorgungsansteuerzeit $T_2$ zur Verfügung stehende Energiemenge beim Aufladen des Energiespeichers nicht konstant ist und schwanken kann, wird bei herkömmlichen Dimmersystemen nach dem Stand der Technik stets von dem ungünstigsten Fall ausgegangen, d.h. die Dimmer-Versorgungsansteuerzeit $T_2$ wird stets so bemessen, dass sie auch im ungünstigsten Fall ausreichend hoch ist, um die Energie bzw. Spannungsversorgung des Dimmers sicherzustellen. Beispielsweise muss bei kleineren Lasten die Dimmer-Versorgungsansteuerzeit $T_2$ zum Wiederaufladen der Dimmer-Spannungsversorgungsschaltung größer bemessen sein als bei großen Lasten.

Der Nachteil bei herkömmlichen Dimmersystemen besteht darin, dass diese auf unvorhergesehene Spannungsschwankungen nicht reagieren können und es so zu Fehlfunktionen des Dimmers kommen kann. Sinkt die Netzspannung zum Wiederaufladen der Energieversorgungsschaltung des Dimmers derart stark ab, dass während der konstanten Dimmer-Versorgungsansteuerzeit $T_2$ ein ausreichendes Aufladen des in dem Dimmer enthaltenen Energiespeichers nicht erfolgt, so kommt es zu Fehlfunktionen, beispielsweise zu einem Flackern des angeschlossenen Beleuchtungskörpers aufgrund von Instabilitäten. Diese Schwingvorgänge können zu einer Zerstörung der Last bzw. des Beleuchtungskörpers und/oder des Dimmers führen.

Es ist daher die Aufgabe der vorliegenden Erfindung einen Dimmer zu schaffen, der stets eine ausreichende Spannungsversorgung aufweist.

Diese Aufgabe wird erfindungsgemäß durch einen Dimmer mit den im Patentanspruch 1 angegebenen Merkmalen gelöst.

Die Erfindung schafft einen Dimmer zum Dimmen einer Last mit einem steuerbaren Leistungsschalter zum Schalten einer Netz-Phasenschaltung an die Last,

einer an die Netz-Phasenleitung angeschlossenen Spannungsversorgungsschaltung zur Versorgung des Dimmers mit einer Dimmer-Versorgungsspannung,

einer Überwachungsschaltung zur Überwachung der von der Spannungsversorgungsschaltung abgegebenen Dimmer-Versorgungsspannung,

wobei die Überwachungsschaltung mittels einer Steuereinheit den Leistungsschalter zum Aufladen eines Energiespeichers in der Spannungsversorgungsschaltung öffnet, wenn die Dimmer-Versorgungsspannung einen Versorgungsspannungs-Schwellenwert bei einem Phasenwinkel unterschreitet.

Weitere bevorzugte Ausführungsformen des erfindungsgemäßen Dimmers sind in den Unteransprüchen angegeben.

Die Erfindung schafft ferner ein Verfahren zum Dimmen einer Last mit dem im Patentanspruch 11 angegebenen Merkmalen.

Im weiteren werden bevorzugte Ausführungsformen des erfindungsgemäßen Dimmers sowie des erfindungsgemäßen Dimmverfahrens zur Erläuterung erfindungswesentlicher Merkmale unter Bezugnahme auf die beigefügten Figuren beschrieben.

Es zeigen:

Fig. 1        ein Blockschaltbild einer bevorzugten Ausführungsform des erfindungsgemäßen Dimmers;

Fig. 2        eine Zeitperiode einer Netz-Phasenspannung zur Erläuterung der Funktionsweise des in Figur 1 dargestellten erfindungsgemäßen Dimmers;

Fig. 3a - 3c        Ablaufdiagramme zur Erläuterung des erfindungsgemäßen Dimmverfahrens.

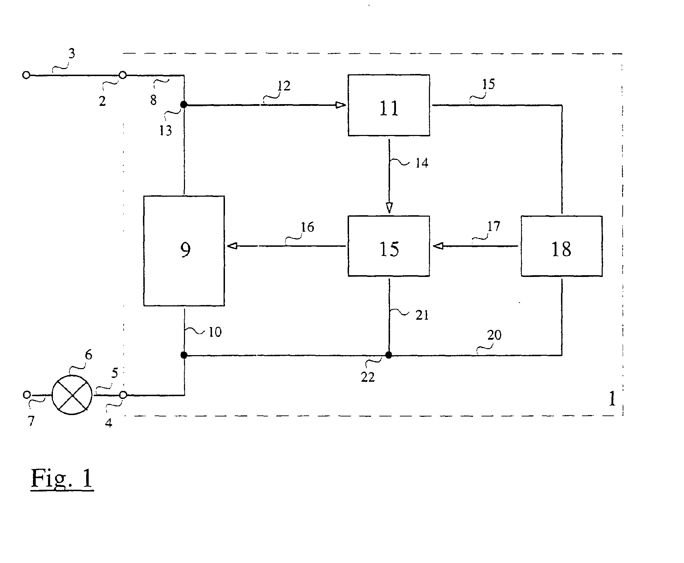

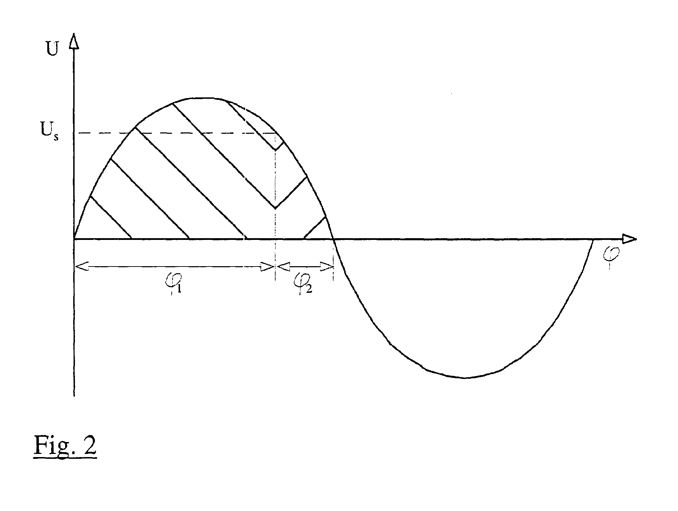

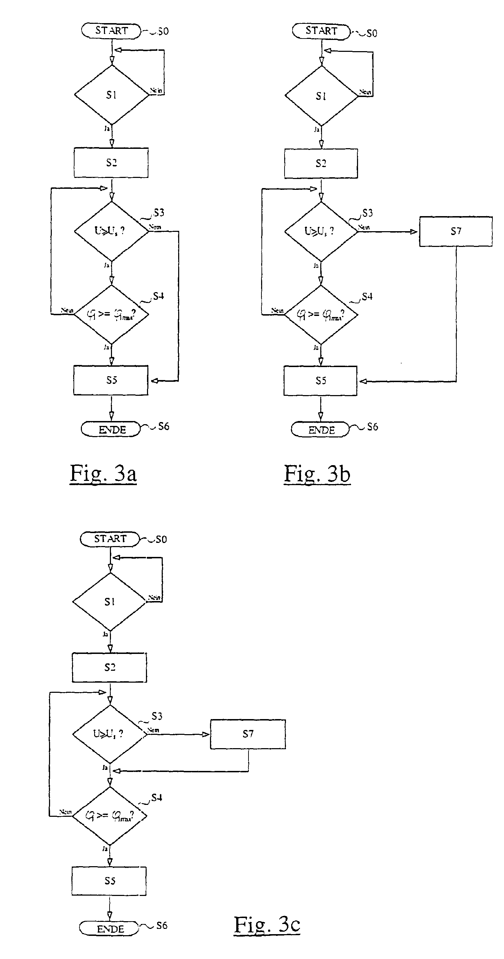

Figur 1 stellt eine bevorzugte Ausführungsform des erfindungsgemäßen Dimmers zum Dimmen einer Last dar.

Der Dimmer 1 ist über einen ersten Anschluss 2 an eine Netz-phasenleitung 3 angeschlossen. An einem zweiten Anschluss 4 ist der Dimmer 1 über eine Leitung 5 an eine Last 6 angeschlossen. Die Last 6 liegt hier an einer Netz-Null-Leitung 7 an, wobei L- und N-Anschluss auch vertauscht werden kann.

An dem Netz-Phasenanschluss 2 des Dimmers 1 ist über eine interne Leitung 8 ein Leistungsschalter 9 angeschlossen, der ausgangseitig über eine Leitung 10 mit dem Anschluss 4 des Dimmers 1 verbunden ist. Der Leistungsschalter 9 dient zum Schalten der Netz-Spannungsphase L an die Last 6. Bei dem Leistungsschalter 9 handelt es sich vorzugsweise um einen MOS-Feldeffekttransistor oder einen IGBT.

Der Dimmer enthält eine aufladbare Spannungsversorgungsschaltung 11 zur Versorgung des Dimmers 1 mit einer Dimmerversorgungsspannung. Die Spannungsversorgungsschaltung 11 ist über eine interne Leitung 12 an einem Abzweigungsknoten 13 an die Leitung 8 angeschlossen. Die Spannungsversorgungsschaltung 11 erhält über die Leitung 12 die Netz-Versorgungsspannung L, die an dem Anschluss 2 des Dimmers 1 anliegt. Die Spannungsversorgungsschaltung 11 versorgt über eine interne Versorgungsspannungsleitung 14 eine Steuereinheit 15 des Dimmers 1. Die Steuereinheit 15 steuert den Leistungsschalter 9 über eine Steuerleitung 16 in Abhängigkeit von einem Erfassungssignal, das Erfassungssignal, das über eine Leitung 17 geschickt wird, beeinflusst den eingestellten Phasenwinkel. Die Überwachungsschaltung 18 überwacht die von der Spannungsversorgungsschaltung 11 abgegebene Dimmer-Versorgungsspannung. Die Überwachungsschaltung 18 ist über eine Leitung 19 mit der Spannungsversorgungsschaltung 11 verbunden und liegt über eine Leitung 20 und die interne Leitung 10 an dem Anschluss 4 des Dimmers 1 an. Die Steuereinheit 15 ist an einen Knoten 22 über eine Leitung 21 ebenfalls an die interne Leitung 20 angeschlossen.

Die Funktionsweise des in Figur 1 dargestellten erfindungsgemäßen Dimmers wird im weiteren unter Bezugnahme auf die Figur 2 erläutert. Die Spannungsversorgungsschaltung 11 des Dimmers enthält einen Energiespeicher mit einem aufladbaren Kondensator. Der Dimmer 1 ermittelt den Nulldurchgang der an der Netz-Phasenleitung 3 anliegenden Wechselspannung und die Überwachungsschaltung 18 gibt ein Erfassungssignal über die Leitung 17 an die Steuereinheit 15 ab, wenn die von der Spannungsversorgungsschaltung 11 abgegebene Dimmer-Versorgungsspannung unter einen Versorgungsspannungs-Schwellenwert $U_S$ absinkt. Erhält die Steuereinheit 15 das Erfassungssignal von der Überwachungsschaltung 18 ,gibt sie über die Steuerleitung 16 ein Steuersignal an den Leistungsschalter 9 ab, um diesen zu öffnen. Nach Unterschreiten des Schwellewertes $U_S$ wird während des Phasenabschnitts $\varphi_1$ der Energiespeicher der Spannungsversorgungsschaltung 11 aufgeladen. Nach dem nächsten Nulldurchgang wiederholt sich der Vorgang, d.h. die Last 6 wird während eines Phasenabschnitts $\varphi_1$ wieder an den Netzphasenanschluss 2 durchgeschaltet bis die Dimmer-Versorgungsspannung erneut den Versorgungsspannungs-Schwellenwert $U_S$ unterschreitet.

Wie man aus Figur 2 erkennen kann, ist bei dem erfindungsgemäßen Dimmer der Phasenabschnitt $\varphi_2$ zum Wiederaufladen des Energiespeichers der Spannungsversorgungsschaltung 11 nicht fest vorgegeben, sondern wird durch den tatsächlichen Spannungsverlauf der Dimmer-Versorgungsspannung bestimmt. Hierdurch wird gewährleistet, dass der Phasenabschnitt $\varphi_2$ zum Wiederaufladen der Spannungsversorgungsschaltung 11 abhängig von dem tatsächlichen Spannungsverlauf ausreichend groß ist. Die Spannungsversorgung an der Steuereinheit 15 des Dimmers 1 kann daher niemals unter einen Minimalwert absinken, sodass Fehlfunktionen des Dimmers 1 in jedem Fall vermieden werden. Der erste Phasenabschnitt $\varphi_1$, bei dem die Last 6 mit Netz-Phasenspannung L versorgt wird, weist eine optimale Länge auf.

Der Versorgungsspannungs-Schwellenwert $U_S$ wird bei einer bevorzugten Ausführungsform durch ein erstes Einstellglied des Dimmers 1 eingestellt.

Bei einer weiteren bevorzugten Ausführungsform wird der maximale Phasenwinkel $\varphi_{max}$. des ersten Phasenabschnitts $\varphi_1$ durch ein zweites Einstellglied eingestellt. Hierdurch erhält man eine Sicherheitsreserve. Bei erreichen des maximalen Phasenwinkel $\varphi_{max}$. öffnet die Steuereinheit 15 durch Abgabe eines Steuersignals über die Steuerleitung 16 den Leitungsschalter 9 zum Aufladen des Energiespeichers in der Spannungsversorgungsschaltung 11.

Bei einer weiteren bevorzugten Ausführungsform wird der voreingestellte maximale Phasenwinkel $\varphi_{max}$. auf den ermittelten Phasenabschnittswinkel $\varphi_1$ der vorangegangenen Versorgungsspannungswelle verkleinert und so die Dimmrichtung geändert.

Die Figuren 3a bis 3c zeigen verschiedene Ausführungsformen des erfindungsgemäßen Verfahren zum Dimmen einer Last.

Figur 3a zeigt eine erste Ausführungsform zum erfindungsgemäßen Dimmverfahrens. Mit dem Schritt $S_0$ wird der Ablauf gestartet. In einem Schritt $S_1$ wird der Phasen-Nulldurchgang festgestellt und somit der Eintritt in den ersten Phasenabschnitt $\varphi_1$ zum Durchschalten der Netzspannung an die Last 6. Wird im Schritt S1 der Nulldurchgang und somit der Eintritt in den ersten Phasenabschnitt $\varphi_1$ erkannt, wird in einem Schritt S2 der Leistungsschalter 9 durch die Steuereinheit 15 geschlossen. Andernfalls wird die Abfrage in Schritt S1 wiederholt.

In einem Schritt S3 wird durch die Überwachungsschaltung 18 überprüft ob die Dimmer-Versorgungsspannung, welche durch die Spannungsversorgungsschaltung 11 abgegeben wird, oberhalb des eingestellten Schwellenwertes $U_S$ liegt. Liegt die Dimmer-Versorgungsspannung über dem Schwellenwert $U_S$, wird in einem Schritt S4 überprüft ob, der eingestellte maximale Phasenabschnittsmittel $\varphi_{1max}$. erreicht worden ist oder nicht. Wenn dies der Fall ist, wird in einem Schritt S5 der Leistungsschalter 9 durch die Steuereinheit 15 zum Aufladen des Energiespeichers innerhalb des Spannungsversorgungsschalters 11 geöffnet. Falls im Schritt S4 festgestellt wird, dass der maximal eingestellte Phasenabschnittswinkel $\varphi_{1max}$. noch nicht erreicht ist, wird die Abfrage wiederholt.

Falls im Schritt S3 erkannt wird, dass die Spannung nicht mehr über dem Schwellenwert $U_S$ liegt, d.h. den Schwellenwert unterschritten hat, wird im Schritt S5 direkt der Leistungsschalter 9 durch die Steuereinheit 15 zum Aufladen des Energiespeichers innerhalb der Spannungsversorgungsschaltung 11 geöffnet. Die dargestellte Sequenz wird im Schritt S6 beendet.

Figur 3b zeigt eine Variante des in Figur 3a dargestellten Ablaufs. Der in Figur 3b dargestellte Funktionsablauf weist einen zusätzlichen Schritt S7 auf, bei dem nach Unterschreiten der Schwellenspannung $U_S$ die Dimmrichtung des Dimmers 1 geändert wird, indem man den Phasenwinkel des ersten Phasenabschnitts $\varphi_1$ verkleinert. Anschließend wird im Schritt S5 der Leistungsschalter 9 durch die Steuereinheit 15 zum Aufladen des Energiespeichers der Spannungsversorgungsschaltung 11 geöffnet.

Bei der in Figur 3c dargestellten Variante erfolgt nach dem Schritt S7, bei dem die Dimmrichtung geändert wird, zunächst die Abfrage im Schritt S4 ob der eingestellte maximale Phasenwinkel $\varphi_{1max}$. des ersten Phasenabschnitts $\varphi_1$ erreicht worden ist oder nicht bevor der Schritt S5 durchgeführt wird.

Sind die Phasenwinkelschritte klein und die Versorgungs-Spannungsschwellenwert $U_S$ hoch eingestellt, wird bei einer Phasenwinkeländerung am Einstellelement der Phasenwinkel des Dimmers in kleinen Schritten nachgeführt. Unterschreitet dabei in einem Schritte die Dimmer-Betriebsspannung bzw. Dimmer-Versorgungsspannung den eingestellten Versorgungs-Spannungsschwellenwert $U_S$, so wird aufgrund der kleinen Schrittweite und der relativ hohen Spannungsschwelle $U_S$ ein stabiler Phasenwinkel erreicht, ohne dass man die Ansteuerung des Leistungsschalters 9 unterbricht.

Bei dem erfindungsgemäßen Verfahren zum Dimmen der Last 6 durch den Dimmer 1 wird mittels verschiedener Einstellglieder der maximale Phasenwinkel $\varphi_{1max}$. des ersten Phasenabschnitts $U_1$ und ein Versorgungs-Spannungsschwellenwert $U_S$ in der Versorgungsspannung eingestellt. Nach Anlegen einer Netz-Wechselspannung L an die Netzphasenleitung 3 wird der an der Netz-phasenleitung 3 angeschlossene Leistungsschalter 9 geöffnet und in einem zweiten Phasenabschnitt $\varphi_2$ ein Energiespeicher der Spannungsversorgungsschaltung 11 aufgeladen, wenn die von der Spannungsversorgung 11 abgegebene Dimmer-Versorgungsspannung den eingestellten Spannungsschwellenwert $U_S$ unterschreitet oder die angelegte Netz-Wechselspannung den maximalen Phasenwinkel $\varphi_{1max}$. erreicht.

## Patentansprüche

1.  Dimmer zum Dimmen einer Last (6) mit

    einem steuerbaren Leistungsschalter (9) zum Schalten eines Netzes (3, 7) an die Last (6);
    einer an das Netz (3, 7) angeschlossenen Spannungsversorgungsschaltung (11) zu Versorgung des Dimmers (1) mit einer Dimmer-Versorgungsspannung;
    einer Überwachungsschaltung (18) zur Überwachung der von der Spannungsversorgungsschaltung (11) abgegebenen Dimmer-Versorgungsspannung;
    wobei eine an die Überwachungsschaltung (18) angeschlossene Steuereinheit (15) den Leistungsschalter (9) zum Aufladen eines Energiespeichers in der Spannungsversorgungsschaltung (11) öffnet, wenn die Dimmer-Versorgungsspannung einen Versorgungsspannungs-Schwellenwert $U_S$ unterschreitet.

2.  Dimmer zum Dimmen einer Last (6),

    mit einem steuerbaren Leistungsschalter (9) zum Schalten eines Netzes (3, 7) an die Last (6),
    mit einer an das Netz (3, 7) angeschlossenen Spannungsversorgungsschaltung (11) zum Versorgen des Dimmers (11) mit einer Dimmer-Versorgungsspannung, und
    mit einer Überwachungsschaltung (18) zur Überwachung der von der Spannungsversorgungsschaltung (11) abgegebenen Dimmer-Versorgungsspannung

    **dadurch gekennzeichnet,**

    **dass** die Überwachungsschaltung (18) ein Erfassungssignal an eine Steuereinheit (15) abgibt, wenn die von der Spannungsversorgungsschaltung (11) abgegebene Dimmer-Versorgungsspannung unter einen Versorgungsspannungs-Schwellenwert $U_s$ absinkt, wobei das Erfassungssignal einen Phasenwinkel bestimmt, über welchen ein Energiespeicher der Spannungsversorgungsschaltung (11) aufgeladen wird.

**3.** Dimmer nach Anspruch 2 **dadurch gekennzeichnet,**
**dass** die Aufladung des Energiespeichers durch die Steuereinheit (15) gesteuert wird, die über eine Steuerleitung (16) ein Steuersignal an den Leistungsschalter (9) abgibt, um den Leistungsschalter (9) zu öffnen.

**4.** Dimmer nach Anspruch 1, **dadurch gekennzeichnet, dass** der Versorgungsspannungs-Schwellenwert $U_s$ durch ein erstes Einstellglied einstellbar ist.

**5.** Dimmer nach Anspruch 1 **dadurch gekennzeichnet, dass** der Energiespeicher ein Kondensator ist.

**6.** Dimmer nach einem der vorrangegangenen Ansprüche **dadurch gekennzeichnet, dass** eine Schaltung zur Ermittlung des Nulldurchgangs einer an dem Netz (3, 7) anliegenden Netz-Spannung vorgesehen ist.

**7.** Dimmer nach einem der vorrangegangenen Ansprüche **dadurch gekennzeichnet, dass** die Steuereinheit (15) den Leistungsschalter (9) zum Aufladen der Spannungsversorgungsschaltung (11) bei einem maximalen Phasenwinkel $\varphi_{1max}$. öffnet.

**8.** Dimmer nach einem der vorrangegangenen Ansprüche **dadurch gekennzeichnet, dass** der maximale Phasenwinkel $\varphi_{1max,}$ durch ein zweites Einstellglied einstellbar ist.

**9.** Dimmer nach einem der vorrangegangenen Ansprüche **dadurch gekennzeichnet, dass** bei Unterschreiten des Versorgungsspannungs-Schwellenwertes $U_s$ der maximale Phasenwinkel $\varphi_{1max}$. verkleinert wird.

**10.** Dimmer nach einem der vorrangegangenen Ansprüche **dadurch gekennzeichnet, dass** der Leistungsschalter (9) ein MOSFET ist.

**11.** Dimmer nach einem der vorrangegangenen Ansprüche, **dadurch gekennzeichnet, dass** der Leistungsschalter (9) ein IGBT ist.

**12.** Dimmer nach einem der vorrangegangenen Ansprüche **dadurch gekennzeichnet, dass** die Last (6) eine Beleuchtungseinrichtung oder motorische Last ist.

**13.** Verfahren zum Dimmen einer Last (6) mit den folgenden Schritten:

(a) Einstellen eines maximalen Phasenwinkels $\varphi_{1max}$. und eines Dimmer-Versorgungsspannungs-Schwellenwertes $U_s$;

(b) Anlegen einer Netz-Wechselspannung L an eine Netz-Phasenleitung (3);

(c) Öffnen eines an die Netz-Phasenleitung (3) angeschlossenen Leistungsschalter (9) und Aufladen eines Energiespeichers in einer Dimmer-Spannungsversorgungsschaltung (11), wenn eine von der DimmerSpannungsversorgungsschaltung (11) abgegebene Dimmer-Versorgungsspannung den Dimmer-Versorgungsspannungsschwellenwert $U_s$ unterschreitet oder die Netz-Wechselspannung L den maximalen Phasenwinkel $\varphi_{1max}$. erreicht.

Fig. 1

Fig. 2

Fig. 3a

Fig. 3b

Fig. 3c